(19) Europäisches Patentamt
European Patent Office
Office européen des brevets

(11) Veröffentlichungsnummer: **0 553 421 B1**

(12) # EUROPÄISCHE PATENTSCHRIFT

(45) Veröffentlichungstag der Patentschrift: **06.09.95**

(21) Anmeldenummer: **92119866.9**

(22) Anmeldetag: **21.11.92**

(51) Int. Cl.[6]: **D21H 17/71**, B27N 3/06, B27N 7/00, //D21H27/22, D21H17/51,D21H17/57

(54) **Tränkharzlösung zum Imprägnieren von Papierbahnen.**

(30) Priorität: **04.12.91 DE 4139961**

(43) Veröffentlichungstag der Anmeldung:
**04.08.93 Patentblatt 93/31**

(45) Bekanntmachung des Hinweises auf die Patenterteilung:
**06.09.95 Patentblatt 95/36**

(84) Benannte Vertragsstaaten:
**AT BE CH DE FR IT LI NL SE**

(56) Entgegenhaltungen:
**FR-A- 2 389 694**

(73) Patentinhaber: **BASF Aktiengesellschaft**
**Carl-Bosch-Strasse 38**
**D-67063 Ludwigshafen (DE)**

(72) Erfinder: **Kirchgaessner, Uwe, Dr.**
**Gerhard-Hauptmann-Strasse 13**
**W-6710 Frankenthal (DE)**
Erfinder: **Decher, Jakob**
**Otto-Karch-Strasse 12**
**W-6712 Bobenheim-Roxheim (DE)**
Erfinder: **Jaeckh, Christof, Dr.**
**Ludolf-Krehl-Strasse 39a**
**W-6900 Heidelberg (DE)**
Erfinder: **Wittmann, Otto**
**Max-Beckmann-Strasse 13b**
**W-6710 Frankenthal (DE)**
Erfinder: **Niessner, Manfred, Dr.**
**Gotenstrasse 25**
**W-6707 Schifferstadt (DE)**
Erfinder: **Petersen, Harro, Dr.**
**Kalmitstrasse 23**
**W-6710 Frankenthal (DE)**

EP 0 553 421 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von modifizierten Melaminharzlösungen zum Imprägnieren von Papierbahnen und die nachfolgende Beschichtung von Holzwerkstoffen.

Zur Herstellung von beispielsweise Möbelteilen und Arbeitsplatten verwendet man Holzwerkstoffe, insbesondere Spanplatten, die mit aminoplastimprägnierten Papierbahnen beschichtet sind. Die Imprägnierung verleiht der Möbeloberfläche die notwendige Härte, Chemikalienbeständigkeit, sowie Hitze- und Feuerwiderstandsfähigkeit. Dabei unterscheidet man mehrlagige Laminate und einlagige Papierfilme.

Bei der Herstellung von Laminaten werden mehrere imprägnierte Papierbahnen miteinander verpreßt, wobei zunehmend das CPL-(Continuous Pressed Laminate)-Verfahren an Bedeutung gewinnt, bei dem die Papierbahnen auf Doppelbandpressen bei Drücken zwischen 25 und 50 bar verpreßt werden. Dabei sind die reaktiven Melaminharze gegenüber den früher üblichen Phenolharzen von Vorteil. Reine Melaminharze sind jedoch zu spröde; entsprechend gefertigte Papierlaminate neigen beim Aufrollen und insbesondere bei der späteren Nachverformung zum Brechen. Man hat deshalb schon versucht, die Melaminharze durch Zusatz von hochsiedenden Polyolen, wie Diethylenglykol, Butandiol oder Saccharose zu modifizieren; damit hergestellte Laminate zeigen aber einen geringen Glanz, insbesondere nach dem Wasserdampftest und bei der Berührung mit kochendem Wasser neigen sie zur Blasenbildung. Außerdem neigen Polyole dazu, bei der Harzverarbeitung aus dem Laminat wieder auszuwandern. Ein Ziel der vorliegenden Erfindung war es deshalb, imprägnierte Papierlaminate bereit zustellen, die die genannten Nachteile nicht aufweisen.

Möbelteile, bei denen die mechanische Beanspruchung gering ist, werden mit einem einlagigen Dekorfilm beschichtet, wobei der Holzwerkstoff in Kurztaktpressen mit kurzen Preßzeiten und niedrigem Druck direkt mit dem imprägnierten Papierfilm beschichtet wird. Verwendet man hier zum Imprägnieren der Papierbahn mit Polyolen modifiziertes Melaminharz, so erhält man matte Oberflächen. Ein weiteres Ziel der Erfindung war daher, imprägnierte Dekorfilme bereitzustellen, die bei der Beschichtung nach dem Kurztaktverfahren normgerechte Dekorflächen (nach DIN 53 799) mit hohem Glanz ergeben.

Die genannten Ziele werden erfindungsgemäß dadurch erreicht, daß man als Tränkharzlösung zum Imprägnieren von Papierbahnen ein Melaminharz einsetzt, welches mit einem Polyharnstoff modifiziert ist.

US-A-3,772,225 beschreibt die Herstellung von Polyharnstoffen aus Polyaminen und Harnstoff sowie deren Verwendung zur Herstellung von wasserfestem Papier und Druckfarben. Es werden keine Hinweise auf elastifizierende und glanzverbessernde Eigenschaften dieser Verbindungsklasse gemacht. Eine Verwendung der Polyharnstoffe zum Modifizieren von Melaminharzen wird nicht erwähnt.

Gegenstand der Erfindung ist eine wäßrige Tränkharzlösung zum Imprägnieren von Papierbahnen, die auf

100 Gew.-teile eines Melamin/Formaldehyd-Vorkondensats oder eines Mischvorkondensats, bei dem bis zu 10 Gew.-% des Melamins durch Harnstoff ersetzt ist

2 - 40 Gew.-teile (bezogen auf Feststoffe) eines Polyharnstoffs der allgemeinen Formel

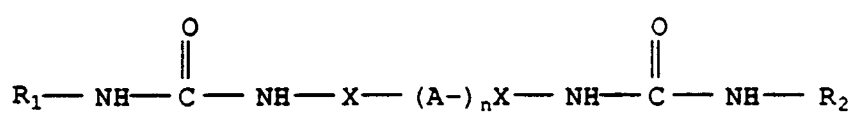

mit

A =

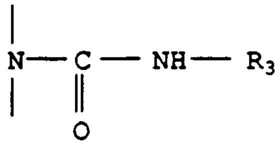

oder

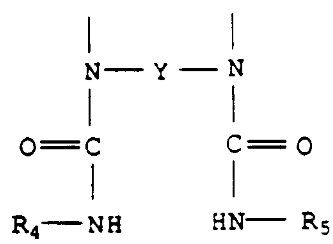

Y = $C_1$-$C_6$-Alkylengruppe

n = 0 oder 1
X = $C_1$-$C_6$-Alkylengruppe,
$C_5$-$C_6$-Cycloalkylengruppe
$C_1$-$C_6$-Hydroxyalkylengruppe oder
$C_4$-$C_{18}$-Oxyalkylengruppe
$R_1$ - $R_5$ = H oder $CH_2OH$
enthält.

Melaminharze im Sinne dieser Erfindung sind Vorkondensate aus Melamin und Formaldehyde, wobei das Molverhältnis von Melamin zu Formaldehyd vorzugsweise 1:1,3 bis 1:2,5 beträgt. Die Kondensation von Melamin und Formaldehyd erfolgt unter an sich bekannten Bedingungen im basischen Milieu bei pH-Werten von 8 bis 10 und Temperaturen von 80 bis 100 °C.

Geeignet sind auch Mischkondensate, bei denen bis zu 10 Gew.-% des Melamins durch Harnstoff ersetzt sind. Die Herstellung solcher Mischkondensate ist bekannt. Sie wird üblicherweise bei pH-Werten von 8 bis 10 und Temperaturen von 70 bis 100 °C durchgeführt.

Den Endpunkt der Kondensationsreaktion bestimmt man über die Trübungstemperatur. Hierzu wird 1 g des Reaktionsgemisches mit der 5fachen Menge an Wasser versetzt und die Temperatur gemessen, bei der eine bleibende Trübung auftritt.

Üblicherweise kondensiert man zu Trübungstemperaturen von 40 bis 60 °C.

Bei der Herstellung der Vorkondensate können auch übliche Modifizierungsmittel wie Ethylenglykol, Diethylenglykol, Phenylglykol oder andere Polyol-Verbindungen wie beispielsweise auch Zuckerderivate oder $\epsilon$-Caprolactam in Mengen von 1 bis 10 Gew.-%, bezogen auf den Feststoffgehalt der unmodifizierten Harzlösung, mitverwendet werden.

Die so erhaltenen Harzlösungen weisen im allgemeinen Feststoffgehalte von 40 - 70 Gew.-% auf. Als Feststoffgehalt wird hier der Trockenrückstand bezeichnet, der ermittelt wird, indem 1 g Harzlösung 2 Stunden im Trockenschrank bei 120 °C getrocknet wird.

Polyharnstoffe sowie ihre Herstellung sind beschrieben in Ullmann's Encyclopädie der Technischen Chemie, 3. Auflage, Band 8, Seite 389f.

Die Herstellung der Polyharnstoffe der Formel (I) erfolgt in wäßriger Lösung. Ein Polyamin mit primären oder sekundären Aminogruppen wird bei erhöhter Temperatur mit Harnstoff unter Abspaltung von Ammoniak zu dem entsprechenden Polyharnstoff umgesetzt.

Als Polyamine eignen sich Alkylendiamine, Dialkylentriamine, Polyalkylenpolyamine sowie funktionelle Polyamine, beispielsweise Ethylendiamin, Propylendiamin-1.3, Diethylentriamin, Dipropylentriamin, Triethylentetramin, Hexamethylendiamin, Etherdiamine, Polyetherdiamine usw.

Zur Herstellung der Polyharnstoffe setzt man die Polyamine mit der theoretisch erforderlichen Menge, vorteilhaft jedoch mit einem geringen Überschuß, an Harnstoff in konzentrierter wäßriger Lösung bei Temperaturen zwischen 80 °C und 120 °C um. Die Reaktionszeit beträgt zwischen einer Stunde und 15 Stunden. Der während der Reaktion entstehende Ammoniak wird vorteilhaft unter Verwendung eines Inertgases, beispielsweise Stickstoff, aus dem Reaktionsgemisch entfernt. Sofern das Produkt nach Abkühlen auf Raumtemperatur auskristallisiert, kann durch mehrmaliges Waschen mit Eiswasser und wenig Methanol der analysenreine Polyharnstoff isoliert werden.

Die Polyharnstoffderivate können je nach chemischer Zusammensetzung auch als 60 - 80 %ige wäßrige Lösungen eingesetzt werden. Zur Erhöhung der wasserlöslichkeit eignen sich Umsetzungsprodukte mit Formaldehyd, bei denen pro Harnstoffgruppe 0,1 bis 0,9 Mol Formaldehyd für die Hydroxymethylierung der Harnstoffderivate eingesetzt wird. Eine ausreichende Erhöhung der Wasserlöslichkeit kann schon mit 0,1 bis 0,3 Mol Formaldehyd pro Harnstoffgruppe erreicht werden. Die so erhaltenen farblosen, wäßrigen, hydroxymethylierten Polyharnstofflösungen sind sehr gut lagerstabil.

Bevorzugte Polyharnstoffe sind:

- Dipropylentrisharnstoff

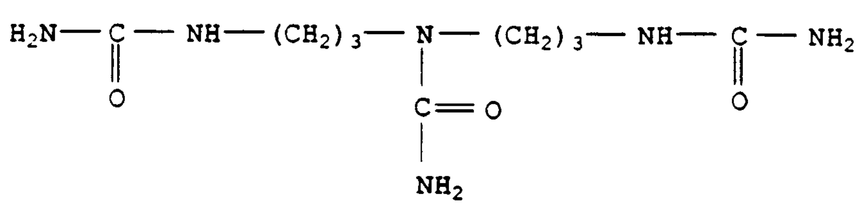

- Hexamethylendiharnstoff

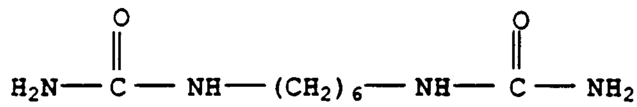

- 4,7-Dioxadecan-1,10-diharnstoff

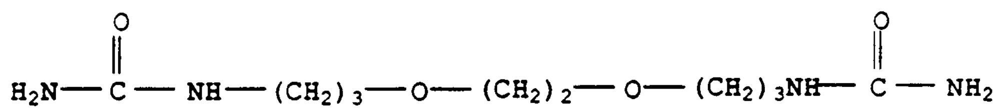

- Diethylentrisharnstoff

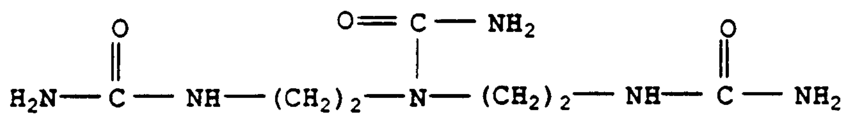

Die erfindungsgemäße Tränkharzlösung wird hergestellt, indem man zum wäßrigen Vorkondensat den gegebenenfalls hydroxymethylolierten Polyharnstoff in fester Form oder als wäßrige Lösung gibt. Es ist auch möglich, den Polyharnstoff schon bei der Herstellung des Tränkharzes zuzusetzen, d.h., dieses Harz in Gegenwart des Polyharnstoffs herzustellen. Schließlich kann der Polyharnstoff auch erst beim Ansetzen der Imprägnierflotte zugegeben werden.

Die so modifizierten Tränkharzlösungen weisen Feststoffgehalte im Bereich von 40 - 70 Gew.-%, besonders vorteilhaft 45 - 65 Gew.-% auf.

Die Tränkharzlösung enthält 2 bis 40 Gew.-teile des Polyharnstoffs, bezogen auf 100 Gew.-teile des Melamin/Formaldehyd-Vorkondensats oder des Mischvorkondensats (jeweils als Feststoffe). Für den Anwendungsbereich CPL sind 10 bis 30 Gew.-teile Polyharnstoff bevorzugt, bei der Herstellung von Papierbeschichtungen nach dem Kurztaktverfahren werden vorzugsweise auf den Feststoff 5 - 20 Gew.-teile Polyharnstoff eingesetzt.

Zur Anwendung als Imprägnierflotte werden den Tränkharzlösungen wie allgemein üblich protonenliefernde Verbindungen als Härter zugesetzt. Als Härter kommen dabei beispielsweise Maleinsäure, Ammoniumsulfit, Ethanolaminhydrochlorid, Dimethylethanolammoniumsulfit sowie Härterkombinationen wie Morpholin/p-Toluolsulfonsäure, N-Methylethanolamin/$SO_2$ oder N-Methylethanolamin/Ethanolamin/$SO_2$ in Betracht.

Die Härter können der Imprägnierflotte in Mengen von 0,1 bis 5 Gew.-% zugesetzt werden. Die Härterdosierung wird den jeweiligen anwendungstechnischen Erfordernissen angepaßt, wobei die Reaktivität der Tränkarzlösung/Härter-Gemische z.B. über die Messung der Trübungszeiten und Gelierzeiten entsprechend eingestellt werden kann.

Den Imprägnierflotten können zusätzlich Hilfsmittel, wie Netzmittel zugesetzt werden. Als Netzmittel eignen sich zum Beispiel ethoxylierte Fettalkohole oder Alkylphenolethoxylate, die in Mengen von 0,2 bis 1,0 Gew.-% in der Flotte enthalten sein können.

Bei der Herstellung der CP-Laminate werden zunächst Dekorpapiere und Kernlagenpapiere mit den erfindungsgemäßen Tränkharzlösungen imprägniert. Als Dekorpapiere werden üblicherweise Papiere mit Flächengewichten im Bereich von 60 bis 150 g/m$^2$ verwendet. Der Harzauftrag bei der Dekorpapierimprägnierung beträgt ca. 90 bis 150 Gew.-%, bezogen auf das Papiergewicht. Der Restfeuchte-Gehalt wird auf ca. 5 - 7 % eingestellt. Als Kernlagenpapiere werden Natronkraftpapiere mit Flächengewichten im Bereich von 80 bis 160 g/m$^2$ eingesetzt. Der Harzauftrag beträgt 80 bis 110 Gew.-%, bezogen auf das Papiergewicht. Es wird ebenfalls ein Restfeuchte-Gehalt von 5 - 7 % eingestellt.

In speziellen Fällen können auch Papiere mit einem Gewicht von 300 g/m$^2$ mit einem Harzauftrag von 30 bis 70 Gew.-%, oder Overlay-Papiere mit einem Gewicht von ca. 20 g/m$^2$ und einem Harzauftrag bis zu

300 Gew.-%, bezogen auf das Papiergewicht, imprägniert werden. Für großtechnische Anwendungen erfolgt der Harzauftrag mittels Imprägniermaschinen. Nach dem bevorzugten Continuous Pressed Laminate (CPL)-Verfahren können dekorative Schichtstoffe hergestellt werden, indem man zwei bis drei Natronkraftpapiere und ein Dekorpapier, jeweils getränkt mit den erfindungsgemäßen Imprägnierflotten, unter Drücken in einem Bereich von 20 - 50 bar und Temperaturen von 160 - 190 °C innerhalb von 20 - 60 s, vorzugsweise auf einer Doppelbandpresse, verpreßt. Dabei erfolgt wahrscheinlich eine chemische Reaktion zwischen den Melamin/Formaldehyd-Vorkondensat und dem Polyharnstoff unter weitgehender Vernetzung des Umsetzungsproduktes. Bei diesem sehr schnell ablaufenden CPL-Verfahren kann die hohe Reaktivität der Melaminharze vorteilhaft ausgenutzt werden. Aber auch bei dem diskontinuierlichen High Pressure Laminate (HPL)-Verfahren können die erfindungsgemäß getränkten Papiere eingesetzt werden. Hierbei erfolgt das Verpressen bei Drücken zwischen 70 - 100 bar, bei Temperaturen von 120 ° - 160 °C und Verweilzeiten zwischen 10 und 60 min. Dabei kann man zusätzlich zu den erfindungsgemäß imprägnierten Papierlagen im Kernlagenbereich auch Phenolharzgetränkte Papiere einsetzen. Es ist auch möglich, die Verweilzeit in der Presse bis auf 2 min zu reduzieren (Kurztakt-Laminate).

Diese Schichtstoffe lassen sich beispielsweise mit UF-Leim oder auch Weißleim auf handelsübliche Spanplatten aufleimen.

Für die Papierfilmherstellung und nachfolgende Beschichtung nach dem Kurztaktverfahren werden Dekorpapiere mit Flächengewichten im Bereich von 60 bis 150 g/m$^2$ imprägniert. Der Harzauftrag beträgt 120 bis 150 %, bezogen auf das Papiergewicht. Der Restfeuchte-Gehalt wird wieder auf ca. 5 - 7 % eingestellt. Die auf diese Weise hergestellten Dekorfilme werden nach dem Kurztaktverfahren (KT-Film) bei Temperaturen von 150 bis 210 °C und Drücken von 15 bis 30 bar während einer Preßzeit von 20 bis 60 s mit dem Holzwerkstoff (handelsübliche Spanplatte) verpreßt.

Es ist auch möglich, die erfindungsgemäßen Tränkharzlösungen zur Herstellung von Faservliesstoffen zu verwenden.

Beispiele für Laminatherstellung

A. Herstellung der Tränkharzlösungen

Harzlösung 1

Eine Mischung aus 1180 g 40 gew.-%igem wäßrigem Formaldehyd und 537 g Wasser wurde auf 30 °C temperiert. Mit 2n wäßriger Natronlauge wurde ein pH-Wert von ca. 9 eingestellt. Sodann erfolgte die Zugabe von 1232 g Melamin. Die Reaktionsmischung wurde anschließend auf 98 bis 100 °C erhitzt, wobei der pH-Wert langsam abfiel und ca. 120 min bei pH 8,6 - 8,8 gerührt. Sobald eine Probe des Reaktionsgemisches eine Trübungstemperatur von ca. 50 °C aufwies, wurde die klare Reaktionslösung mit 17,5 Gew.-%, bezogen auf den Feststoffgehalt der unmodifizierten Harzlösung, Dipropylentrisharnstoff, eingesetzt als 75 %ige wäßrige Lösung, (mit Formaldehyd im Molverhältnis DPTH:Fo 1:0,5 anmethyloliert) versetzt, wobei der geringe pH-Wert-Abfall mit 2n wäßriger Natronlauge kompensiert wurde, und anschließend sofort auf Raumtemperatur abgekühlt. Der pH-Wert wird gegebenenfalls mit 2n wäßriger Natronlauge auf ca. 10 eingestellt.

Viskosität (bei 20 °C): 70 mPa•s

Harzlösung 2

Einsatzstoffe und Herstellungsbedingungen wie bei 1. Anstelle von 17,5 Gew.-% wurden 20,5 Gew.-% Dipropylentrisharnstoff (mit Formaldehyd im Molverhältnis DPTH:Fo 1:0,5 anmethyloliert), bezogen auf den Feststoffgehalt der unmodifizierten Tränkharzlösung, am Ende der Kondensation zugegeben.

Viskosität (bei 20 °C): 50 mPa•s

Harzlösung 3

Eine Mischung aus 811,5 g 40 gew.-%igem wäßrigem Formaldehyd und 358 g Wasser wurde auf 30 °C temperiert und dann mit 2N wäßriger Natronlauge auf einen pH-Wert von ca. 9 eingestellt. Sodann werden 17,5 Gew.-% 4,7-Dioxadecan-1,10-diharnstoff,bezogen auf den Feststoffgehalt der unmodifizierten Harzlösung, und 821,6 g Melamin zugefügt. Das Reaktionsgemisch wurde auf 100 °C erhitzt, wobei der pH-Wert langsam abfiel und bei pH 8,6 - 8,8 gerührt. Nach Erreichen eines Trübungspunktes von ca. 48 °C wurde die Reaktionsmischung sofort auf Raumtemperatur abgekühlt. Mit 2n Natronlauge wurde ein pH-Wert von ca. 10 eingestellt.

Viskosität (bei 20 °C) : 80 mPa•s

Harzlösung 4 (Stand der Technik)

Wäßrige Harzlösung auf Basis Melamin und Formaldehyd im Molverhältnis 1:1,6. Als Modifizierungsmittel dienten 3 % Caprolactam, 3 % Saccharose und 3 % Diethylenglykol, jeweils bezogen auf den Feststoffgehalt der unmodifizierten Harzlösung.

Viskosität (bei 20 °C): 50 mPa•s

Feststoffgehalt: 60 Gew.-%

B. Herstellung der Imprägnierflotten für die Laminatherstellung

Zur Herstellung der Imprägnierflotten wurden die Harzlösungen auf einen Feststoffgehalt von ca. 50 Gew.-% eingestellt und anschließend mit soviel einer 85 gew.-%igen Lösung des Härters 529 FL der BASF (Umsetzungsprodukt eines organischen Amins mit schwefliger Säure) versetzt (0,2 - 0,8 Gew.-%, bezogen auf die Harzlösung), daß die Harzflotte eine Trübungszeit von ca. 6,5 min aufweist. Außerdem versetzt man die Harzlösung mit 0,3 Gew.-% eines handelsüblichen Alkylphenolethoxylat-Netzmittels.

C. Herstellung der Laminate

Zwei Natronkraftpapiere mit einem Flächengewicht von 135 g/m$^2$ und ein bedrucktes Dekorpapier (Eiche-Muster) mit einem Flächengewicht von 80 g/m$^2$ wurden imprägniert. Der Harzauftrag bei der Natronkraftpapier-Imprägnierung betrug ca. 100 %, bei der Dekorpapier-Imprägnierung ca. 120 %, bezogen jeweils auf das Papiergewicht. In beiden Fällen wurde ein Restfeuchte-Gehalt von ca. 6,5 % eingestellt, indem das Papier bei 140 °C getrocknet wurde.

Die Papiere wurden bei 165 °C und einem Druck von 50 bar innerhalb von 30 s zum Schichtstoff verpreßt.

D. Prüfmethode

1. Nachverformbarkeit der Laminate

Zur Prüfung der Nachverformbarkeit wurde der nach den angegebenen Maßen aus dem Laminat ausgeschnittene Prüfkörper (165 x 90 mm) in eine Biegebank nach DIN 53799 eingespannt. Die Biegestelle wurde auf 140 °C aufgeheizt und dann um einen Radius von 6 mm gebogen. Die Nachverformbarkeit wird nach folgenden Kriterien beurteilt:

Note 1 Einwandfreie Biegung ohne Riß
Note 2 Gebogen, jedoch kleiner Riß unter 1 cm
Note 3 Gebogen, jedoch mit Riß über 1 cm
Note 4 Abgeknickt
Note 5 Laminat durchgebrochen

2. Kochtest

Der Probekörper wird 2 h lang mit kochendem Wasser behandelt. Anschließend wird der Probenkörper 5 min in kaltes Wasser gelegt, dann herausgenommen, abgetrocknet und auf sichtbare Veränderungen der Oberfläche und des Gefüges untersucht (Blasenbildung etc.).

3. Wasserdampftest nach DIN 53 799:

Es wird geprüft, ob nach der Behandlung mit Wasserdampf nach 1 h Veränderungen (Blasen, Glanzverlust) in der Dekoroberfläche aufgetreten sind. Der Glanzverlust wird mit Hilfe des Glanzprüfgerätes bestimmt. Der jeweils erhaltene Wert wird direkt in % Reflexion abgelesen.

E. Prüfergebnisse

| | Harz-lösung 1 | Harz-lösung 2 | Harz-lösung 3 | Harz-lösung 4 |
|---|---|---|---|---|
| Nachverform-barkeit | | | | |
| Note | 1 | 1 | 1 | 4 |
| Kochtest | keine Blasen | keine Blasen | keine Blasen | Blasen-bildung |
| Wasserdampf-test | | | | |
| Glanzgrad vor | 17 % | 16 % | 15 % | 14 % |
| nach | 19 % | 17 % | 16 % | 8 % |

Beispiel für den Anwendungsbereich Kurztaktfilmbeschichtung

A. Herstellung der Harzlösung 5
Einsatzstoffe und Herstellungsverfahren wie bei 1. Am Ende der Kondensationsreaktion wurden 13 Gew.-%, bezogen auf den Feststoffgehalt des unmodifizierten Harzes, Dipropylentrisharnstoff (mit Formaldehyd im Molverhältnis DPTH : Fo 1:0,5 anmethyloliert) zugegeben.
Viskosität (bei 20 °C): 60 mPa•s
B. Herstellung der Imprägnierflotte
Zur Herstellung der Imprägnierflotte wurde die Harzlösung 5 mit Wasser auf einen Feststoffgehalt von 55 Gew.-% eingestellt und mit 0,3 Gew.-%, bezogen auf die Harzlösung, eines handelsüblichen Alkylphenolethoxylat-Netzmittels versetzt. Mit einer 85 gew.-%igen wäßrigen Lösung des Härters 529 FL wurde eine Trübungszeit von ca. 5 min eingestellt.
C. Imprägnierung und Beschichtung
Es wurden weiße Dekorpapiere mit einem Flächengewicht von 80 $g/m^2$ imprägniert. Der Harzauftrag betrug ca. 120 %, der Restfeuchte-Gehalt wurde auf etwa 6,5 % eingestellt. Die so hergestellten Dekorfilme wurden nach dem Kurztaktverfahren mit 20 bar bei 190 °C innerhalb von 35 s auf übliche beschichtungsfähige Spanplatten verpreßt.
Es wurde ein Möbelteil mit harter und geschlossener Oberflächenbeschichtung erhalten, die auch nach der Behandlung mit Wasserdampf noch einen hervorragenden Glanz aufwies.

## Patentansprüche

1. Wäßrige Tränknarzlösung zum Imprägnieren von Papierbahnen, dadurch gekennzeichnet, daß sie auf 100 Gew.-teile eines Melamin/Formaldehyd-Vorkondensats oder eines Mischvorkondensats, bei dem bis zu 10 Gew.-% des Melamins durch Harnstoff ersetzt ist
2 - 40 Gew.-teile eines Polyharnstoffs (jeweils bezogen auf Feststoffe) der allgemeinen Formel

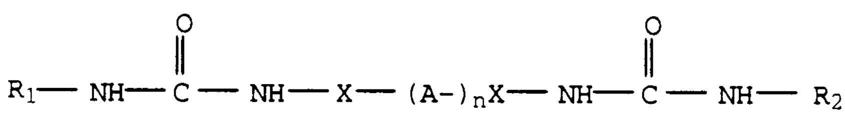

mit
A =

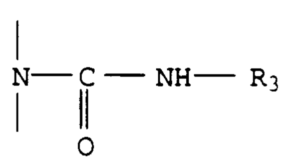

oder

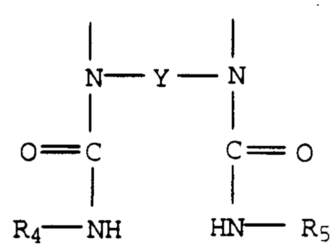

| | |
|---|---|
| Y = | $C_1$-$C_6$-Alkylengruppe |
| n = | 0 oder 1 |
| X = | $C_1$-$C_6$-Alkylengruppe, $C_5$-$C_6$-Cycloalkylengruppe $C_1$-$C_6$-Hydroxyalkylengruppe oder $C_4$-$C_{18}$-Oxyalkylengruppe |
| $R_1$ - $R_5$ | = H oder $CH_2OH$ |

enthält.

2. Imprägnierflotte, enthaltend eine Tränknarzlösung nach Anspruch 1, dadurch gekennzeichnet, daß sie 0,1 bis 5 Gew.-teile einer protonenliefernden Verbindung als Härter, sowie übliche Hilfsmittel enthält.

3. Verfahren zur Beschichtung von Holzwerkstoffen, insbesondere Spanplatten, dadurch gekennzeichnet, daß man die Holzwerkstoffe mit Papierbahnen beschichtet, die mit einer Imprägnierflotte nach Anspruch 2 imprägniert sind.

**4.** Verfahren zur Beschichtung von Holzwerkstoffen nach Anspruch 3, dadurch gekennzeichnet, daß mehrere Lagen imprägnierter Papierbahnen bei Drücken zwischen 20 und 100 bar und Temperaturen zwischen 120 und 190 °C miteinander verpreßt werden und das so hergestellte Papierlaminat anschließend auf den Holzwerkstoff aufgeklebt wird.

**5.** Verfahren zur Beschichtung von Holzwerkstoffen nach Anspruch 3, dadurch gekennzeichnet, daß eine imprägnierte Papierbahn als Dekorfilm nach dem Kurztaktverfahren bei Drücken von 15 bis 30 bar und Temperaturen zwischen 150 und 210 °C auf den Holzwerkstoff aufgepreßt wird.

**Claims**

**1.** An aqueous resin solution for impregnating paper webs which contains 2 - 40 parts by weight of a polyurea (in each case based on solids) of the formula

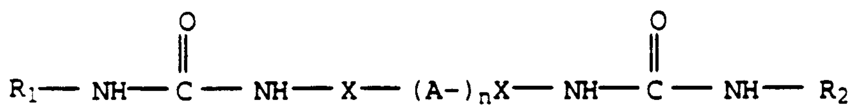

with
A =

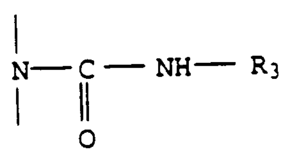

or

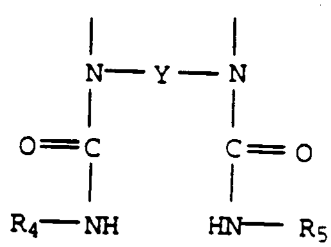

Y = $C_1$-$C_6$-alkylene
n = 0 or 1
X = $C_1$-$C_6$-alkylene, $C_5$-$C_6$-cycloalkylene, $C_1$-$C_6$-hydroxyalkylene or $C_4$-$C_{18}$-oxyalkylene,
$R_1$-$R_5$ = H or $CH_2OH$

per 100 parts by weight of a melamine/formaldehyde precondensate or a mixed precondensate in which up to 10% by weight of the melamine is replaced by urea.

**2.** An impregnation liquor containing a resin solution as claimed in claim 1, which contains from 0.1 to 5 parts by weight of a proton-supplying compound as hardener, and conventional auxiliaries.

**3.** A process for coating woodbase materials, especially chipboard, which comprises coating the materials with paper webs which are impregnated with an impregnation liquor as claimed in claim 2.

**4.** A process for coating woodbase materials as claimed in claim 3, wherein a plurality of layers of impregnated paper webs are compressed together under from 20 to 100 bar and at from 120 to 190 °C, and the paper laminate produced in this way is subsequently bonded to the woodbase material.

**5.** A process for coating woodbase materials as claimed in claim 3, wherein an impregnated paper web is pressed as decorative film onto the woodbase material by the short-cycle process under from 15 to 30 bar and at from 150 to 210 °C.

## Revendications

**1.** Solution aqueuse d'une résine d'imprégnation pour l'imprégnation de bandes ou feuilles continues de papier, caractérisée en ce qu'elle contient

pour 100 parties en poids d'un précondensat de mélamine/formaldéhyde ou d'un précondensat mixte dans lequel jusqu'à 10% en poids de la mélamine sont remplacés par de l'urée,

2 à 40 parties en poids d'une polyurée (à chaque fois rapportés aux solides) de la formule générale

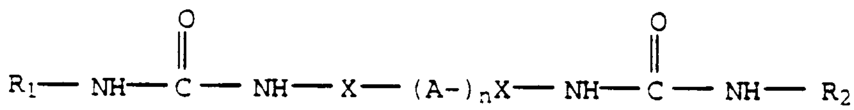

avec

A =

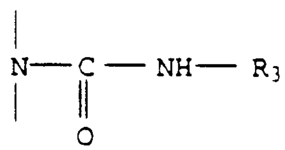

ou

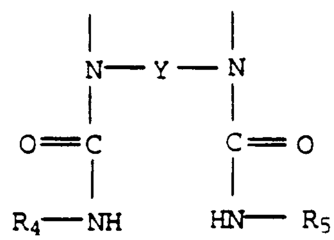

| | | |
|---|---|---|
| Y | = | radical alkylène en $C_1$ à $C_6$ |
| n | = | O ou 1 |
| X | = | radical alkylène en $C_1$ à $C_6$, radical cycloalkylène en $C_5$ ou $C_6$, radical hydroxyalkylène en $C_1$ à $C_6$, ou radical oxyalkylène en $C_4$ à $C_{18}$, |
| $R_1$-$R_5$ | = | H ou $CH_2OH$. |

**2.** Bain d'imprégnation, qui contient une solution de résine d'imprégnation suivant la revendication 1, caractérisé en ce qu'il contient 0,1 à 5 parties en poids d'un composé fournissant des protons à titre de durcisseur, ainsi que des adjuvants habituels.

**3.** Procédé de revêtement de matériaux dérivés du bois, plus particulièrement des panneaux de copeaux ou de particules, caractérisé en ce que l'on revêt les matériaux dérivés du bois de feuilles continues ou bandes de papier, qui ont été imprégnées avec un bain d'imprégnation suivant la revendication 2.

**4.** Procédé de revêtement de matériaux dérivés du bois suivant la revendication 3, caractérisé en ce que l'on comprime mutuellement plusieurs couches de bandes ou feuilles continues de papier imprégnées à des températures comprises entre 120 et 190 °C et sous des pressions variant de 20 à 100 bars et on colle ensuite le lamifié de papier ainsi fabriqué sur le matériau dérivé du bois.

**5.** Procédé de revêtement de matériaux dérivés du bois suivant la revendication 3, caractérisé en ce que l'on presse une feuille ou bande continue de papier imprégnée à titre de film décoratif selon le procédé à contact de courte durée à des températures comprises entre 150 et 210 °C et à des pressions de 15 à 30 bars sur le matériau dérivé du bois.